# EUROPÄISCHE PATENTSCHRIFT

(11) **EP 1 977 850 B1**
(45) Veröffentlichungstag und Bekanntmachung des Hinweises auf die Patenterteilung: **10.04.2013**
(21) Anmeldenummer: 08001774.2
(22) Anmeldetag: 31.01.2008
(51) Int. Cl.: B23K 26/03, B23K 26/04, G01N 21/17, G01B 9/02

(54) **Bearbeitungseinrichtung zur die Bearbeitung von Werkstücken**
Processing device for material processing
Dispositif de traitement de matériau

(30) Priorität: 05.04.2007 DE 102007016444
(43) Veröffentlichungstag der Anmeldung: 08.10.2008
(73) Patentinhaber: Precitec Optronik GmbH, 63110 Rodgau (DE)
(72) Erfinder: Dietz, Christoph, 63179 Obertshausen (DE); Kogel-Hollacher, Markus, 63808 Haibach (DE)
(74) Vertreter: Schwanhäußer, Gernot

(56) Entgegenhaltungen:
- EP-A- 0 956 809
- EP-A- 1 231 496
- EP-A- 1 886 758
- DE-A1- 10 155 203

## Beschreibung

Die Erfindung betrifft eine Bearbeitungseinrichtung für die Bearbeitung von Werkstücken mit lichtundurchlässiger Oberfläche nach dem Oberbegriff des Anspruchs 1. Eine solche Bearbeitungseinrichtung ist aus der DE 101 55 203 A1 bekannt.

Eine vom Markt her bekannte Bearbeitungseinrichtung ermöglicht eine Relativbewegung zwischen einem oder mehreren zu bearbeitenden Werkstücken und dem Bearbeitungskopf, um eine abtragende und/oder verbindende Materialbearbeitung zu ermöglichen. Der Bearbeitungskopf ist mit einer integrierten oder separat ausgeführten Quelle für den hochenergetischen Bearbeitungsstrahl, beispielsweise einen Laserstrahl oder einen Elektronenstrahl, ausgerüstet. Typische Anwendungsgebiete für eine derartige Bearbeitungseinrichtung sind das Abtragen von Material eines Werkstücks mittels eines Laserstrahls oder das Verschweißen von Kunststoffteilen oder Metallteilen mittels eines Elektronenstrahls oder eines Laserstrahls. Je nach Anwendungsgebiet werden an derartige Bearbeitungsprozesse hohe Qualitätsanforderungen gestellt, die unter anderem auch eine exakte Führung des hochenergetischen Bearbeitungsstrahls gegenüber dem Werkstück sowie eine Kontrolle des Bearbeitungsergebnisses am Werkstück erfordern. Zu diesem Zweck kann eine bekannte Bearbeitungseinrichtung mit einem oder mehreren Sensoreinrichtungen versehen sein, die unter Anwendung optischer (beispielsweise Lichtschnittverfahren) und/oder elektrischer (beispielsweise Wirbelstromverfahren) und/oder akustischer (beispielsweise Ultraschallverfahren) Messverfahren eine zur Qualitätskontrolle notwendige Überprüfung des Bearbeitungsergebnisses ermöglichen.

Da die Sensoren für die Anwendung der bekannten Messverfahren von dem hochenergetischen Bearbeitungsstrahl stark beeinflusst werden und/oder einen mechanischen Kontakt zur bearbeiteten Oberfläche benötigen, ist ein Mindestabstand zwischen dem Bearbeitungsort des Bearbeitungsstrahls und der Messstelle, an der das jeweilige Messverfahren angewendet wird, einzuhalten. Somit kann eine Prozessregelung für den Bearbeitungsstrahl lediglich mit einem Zeitverzug stattfinden. Der Zeitverzug ergibt sich aus der Bearbeitungsgeschwindigkeit und dem geometrischen Abstand zwischen Bearbeitungsort und Messort.

Die Bearbeitungseinrichtung, die aus der eingangs bereits genannten DE 101 55 203 A1 bekannt ist, enthält ein Messsystem zum Erfassen von 3D-Oberflächendaten, das als Weisslichtinterferometer, Kurzkohärenzlidar oder als konfokale Messvorrichtung ausgebildet sein kann. Das Messlicht wird jedoch nicht mit Hilfe eines beweglich aufgehängten Spiegels über das Werkstück geführt.

Aus der EP 1 231 496 A2 ist ein optischer Kohärenztomograph bekannt, der für die Vermessung der Hornhaut des menschlichen Auges vorgesehen ist. Mit einem Bearbeitungslaser kann eine Fotoablation der Hornhaut durchgeführt werden.

Die EP 1 886 758 A1, die lediglich Stand der Technik nach Artikel 54 (3) EPÜ ist, betrifft ebenfalls einen optischen Kohärenztomographen für die Vermessung der Hornhaut des menschlichen Auges. Das Messlicht für den optischen Kohärenztomographen wird aus dem Bearbeitungslicht für die Fotoablation ausgekoppelt.

Die Aufgabe der Erfindung besteht darin, eine Messeinrichtung und ein Verfahren bereitzustellen, die bzw. das eine verbesserte Prozessführung für den Bearbeitungsprozess mit dem hochenergetischen Bearbeitungsstrahl ermöglicht.

Bezüglich der Messeinrichtung wird diese Aufgabe erfindungsgemäß durch eine Bearbeitungseinrichtung mit den Merkmalen des Anspruchs 1 gelöst.

Vorteilhafte Ausgestaltungen der Erfindung sind Gegenstand von Unteransprüchen.

Erfindungsgemäß ist die Bearbeitungseinrichtung derart ausgebildet, dass dem Bearbeitungskopf wenigstens eine als optischer Kohärenztomograph ausgebildete Abtasteinrichtung zugeordnet ist, die für eine Oberflächenabtastung vorgesehen ist.

Unter einem optischen Kohärenztomographen wird eine Messeinrichtung verstanden, die sich unter Zuhilfenahme eines Interferometers die Kohärenzeigenschaften, also die Fähigkeit des Lichts zur Interferenz, zunutze macht. Zu diesem Zweck ist vorgesehen, von einer breitbandigen Lichtquelle ausgesendete Lichtstrahlen mit Hilfe einer Strahlteilereinrichtung, insbesondere mit einem halbdurchlässigen Spiegel, in zwei Strahlenbündel aufzutrennen. Das erste Strahlenbündel wird in einem Referenzarm geführt, der eine bekannte, einstellbare Länge aufweist. Das Strahlenbündel wird endseitig im Referenzarm reflektiert, erneut im Referenzarm geführt und anschließend auf einen Detektor eingekoppelt. Das zweite Strahlbündel wird auf die zu vermessende Oberfläche geleitet und dort zumindest teilweise wieder in Richtung des Kohärenztomographen reflektiert. Das reflektierte Licht wird ebenfalls auf den Detektor im Kohärenztomographen eingekoppelt und führt dort zur Interferenz mit dem ersten Strahlenbündel. Aus dem vom Detektor erzeugten Messsignal kann eine Information darüber gewonnen werden, wie lang der Weg für das zweite Strahlenbündel ab dem Strahlteiler bis zum Detektor war. Daraus kann ein Abstand zwischen dem Kohärenztomographen und der zu vermessenden Oberfläche ermittelt werden.

An Stelle eines Strahlteilers, z.B. in Platten- oder Würfelform, kann auch ein Faserkoppler mit zwei getrennten Faserbündeln, die zur Auskopplung der beiden Strahlenbündel dienen, eingesetzt werden.

Je nach technischer Auslegung des Kohärenztomographen findet eine Messung sequentiell (zeitkodiert) oder simultan (räumlich kodiert) im Zeitbereich (time domain) oder im Frequenzbereich (frequency domain) statt. Für eine Auslegung eines Kohärenztomographen zur Messung im Frequenzbereich bei zeitkodierter Messung wird anstelle einer für die übrigen Auslegungen vorgesehenen breitbandigen Lichtquelle eine Lichtquelle mit veränderlicher Wellenlänge, insbesondere ein durchstimmbarer Laser, eingesetzt.

Erfindungsgemäß wird der optische Kohärenztomograph zur kontaktlosen Abtastung einer Oberflächengeometrie einer lichtundurchlässigen Oberfläche genutzt. Informationen über Strukturen, die sich unterhalb der lichtundurchlässigen Oberfläche befinden, werden hingegen bei dem erfindungsgemäßen Verfahren nicht gewonnen.

Die Oberflächenabtastung erfolgt ein-, zwei oder dreidimensional. Eine eindimensionale Oberflächenabtastung liefert einen Abstand vom Kohärenztomographen zur abgetasteten Oberfläche. Eine zweidimensionale Oberflächenabtastung liefert einen Oberflächenverlauf, d.h. ein linienartiges Oberflächenprofil der abgetasteten Oberfläche. Eine dreidimensionale Oberflächenabtastung liefert ein flächiges Abbild, also ein Oberflächenrelief der abgetasteten Oberfläche.

Die Abtastung der Oberfläche erfolgt mit Hilfe eines Messlichtstrahls, der vom Kohärenztomographen ausgesendet und an der zu vermessenden Oberfläche reflektiert wird. Das reflektierte Licht wird zumindest teilweise in den optischen Kohärenztomographen zurück reflektiert und zusammen mit einem Referenzlichtstrahl auf einen Detektor geleitet. Dort wird anhand der Interferenz zwischen den reflektierten Anteilen des Messlichtstrahls und dem Referenzlichtstrahl eine Oberflächen-Geometrieinformation gewonnen.

Die optische Kohärenztomographie weist eine hohe Auflösung für die zu untersuchende räumliche Geometrie der Oberfläche auf. Außerdem kann ein Abstand zwischen dem vom hochenergetischen Bearbeitungsstrahl bestimmten Bearbeitungsort und dem Messort, an dem die Oberflächenabtastung durch den optischen Kohärenztomograph stattfindet, sehr klein, vorzugsweise verschwindend, gewählt werden. Damit liegt auch nur ein kleiner, insbesondere verschwindender, zeitlicher Versatz zwischen Bearbeitung und Oberflächenermittlung vor, so dass eine vorteilhafte Prozesssteuerung durchgeführt werden kann.

Versuche haben gezeigt, dass die Oberflächenabtastung mit Hilfe der optischen Kohärenztomographie nicht oder allenfalls unwesentlich durch das sehr helle Prozesslicht gestört wird, das im allgemeinen bei der Bearbeitung mit hochenergetischem Prozesslicht entsteht. Dies ist ein wesentlicher Vorteil gegenüber anderen Messverfahren, bei denen das Prozesslicht in optischen Detektoren o.ä. die eigentlich Messsignale überstrahlt.

In Ausgestaltung der Erfindung ist vorgesehen, dass ein für die Abtasteinrichtung vorgesehener optischer Referenzpfad in einer optischen Faser geführt ist. Bei einem bekannten, als Freistrahl zwischen mehreren optischen Elementen geführten Referenzpfad müssen hohe Anforderungen an die Qualität und Justage der dazu verwendeten optischen Elemente erfüllt werden. Bei Führung des optischen Referenzpfads in einer optischen Faser, insbesondere in einer Kunststoff- oder Glasfaser, wird eine kostengünstige und kompakte Aufbauweise für den Referenzpfad erzielt.

In weiterer Ausgestaltung ist vorgesehen, dass die optische Faser des Referenzpfads auf einen von einer Steuereinrichtung ansteuerbaren Dehnkörper aufgebracht, insbesondere aufgewickelt, ist. Zur Durchführung der optischen Kohärenztomographie ist eine zeitabhängige Änderung der Länge des Referenzpfads notwendig, die durch elastische Dehnung der optischen Faser verwirklicht werden kann. Zu diesem Zweck ist die optische Faser des Referenzpfads auf einen Dehnkörper aufgebracht. Der Dehnkörper ist vorzugsweise aus einem piezoelektrischen Material hergestellt und ändert durch Anlegen einer Steuerspannung sein Volumen, womit die aufgebrachte optische Faser in ihrer Länge beeinflusst wird. Vorzugsweise ist der Dehnkörper zylindrisch ausgeführt und mit einer oder mehreren Lagen der optischen Faser umwickelt, so dass eine besonders homogene Dehnung der Faser gewährleistet ist.

In weiterer Ausgestaltung der Erfindung ist eine Länge des optischen Referenzpfads derart gewählt, dass ein Abstand zwischen einer Austrittsebene eines Messstrahls und einer zu vermessenden Oberfläche größer 100 mm, vorzugsweise grö-βer 250 mm, besonders bevorzugt größer 500 mm, insbesondere größer 800 mm betragen kann. Somit ist eine kontaktlose Erfassung der Geometrie der zu bearbeitenden, der momentan in Bearbeitung befindlichen oder der bereits bearbeiteten Oberfläche mit einem Abstand möglich, der auf einen Arbeitsabstand zwischen einer dem Werkstück zugewandten Stirnseite des Bearbeitungskopfs und dem Werkstück angepasst ist. Damit erfolgt durch die Abtasteinrichtung keine Einschränkung hinsichtlich der Positionierung des Bearbeitungskopfs gegenüber dem Werkstück. Dabei bezeichnet die Austrittsebene des Messstrahls des optischen Kohärenztomographen diejenige Ebene, in der der vom optischen Kohärenztomograph in Richtung des Werkstücks ausgesendete Messstrahl zum Freistrahl wird, also kein optisches Element mehr passiert.

Bei einer bevorzugten Ausführungsform der Erfindung wird der optische Referenzpfad derart in seiner Länge geändert, dass ein Meßbereich des optischen Kohärenztomographen längs seiner auf das Werkstück gerichteten optischen Achse wenigstens 3 mm, vorzugsweise wenigstens 5 mm, besonders bevorzugt wenigstens 8 mm beträgt. Zu diesem Zweck wird der Referenzpfad um einen ähnlichen, insbesondere um einen identischen, Längenbetrag gedehnt. Das heißt, dass bei einer Dehnung des Referenzpfads um 8mm eine Tiefeninformation der abgetasteten Oberfläche in einem Intervall von 8mm gewonnen werden kann.

Erfindungsgemäß ist eine Ablenkeinrichtung an der Abtasteinrichtung vorgesehen, die für eine Ablenkung des Messstrahls aus der Abtasteinrichtung auf das Messobjekt und von Reflexionsstrahlen ausgehend vom Messobjekt in die Abtasteinrichtung ausgebildet ist. Mit der Ablenkeinrichtung kann der Messstrahl unabhängig von einer Relativbewegung zwischen dem Bearbeitungskopf und dem Werkstück über die Werkstückoberfläche geführt werden. Damit kann beispielsweise ein Abstand zwischen einer Auftreffstelle des hochenergetischen Bearbeitungsstrahls auf das Werkstück und einer Messstelle des Messstrahls auf der Oberfläche des Werkstücks variiert werden. Um eine Detektion der Oberflächengeometrie des Werkstücks zu ermöglichen, ist weiterhin vorgesehen, die von dem Messobjekt reflektierten Strahlen zumindest teilweise mit der Ablenkeinrichtung in die Abtasteinrichtung einzukoppeln, so dass sich der optische Weg für den Messstrahl und für die Reflexionsstrahlen gleichen.

Die Ablenkeinrichtung weist wenigstens einen beweglich aufgehängten, von einer Steuereinrichtung ansteuerbaren Spiegel auf. Der Spiegel ist für eine Ablenkung des Messstrahls und der Reflexionsstrahlen vorgesehen und kann in einer oder in mehreren Raumrichtungen verschwenkt werden, um eine ein- bzw. zweidimensionale Relativbewegung des Messstrahls gegenüber der Oberfläche des Werkstücks zu bewirken, um eine linienförmige oder flächige Abtastung der Oberfläche des Werkstücks ermöglichen. Bei einer bevorzugten Ausführungsform der Erfindung ist der Spiegel kardanisch aufgehängt und wird von mehreren, unabhängig voneinander ansteuerbaren piezoelektrischen Stellelementen in mehreren Raumrichtungen verschwenkt.

Ferner ist erfindungsgemäß im Strahlengang zwischen dem Spiegel und dem Messobjekt ein F-Theta-Objektiv angeordnet. Bei einem F-Theta-Objektiv ist die Bildhöhe proportional zu einem Eingangswinkel, den ein einfallendes paralleles Lichtbündel mit der optischen Achse einschließt. Erfindungsgemäß ist dem F-Theta-Objektiv ein Spiegel zugeordnet, auf den der Messstrahl derart auftrifft, dass die vom Spiegel hervorgerufene Verschwenkung des Messstrahls eine Linearbewegung des Brennpunkts des Messstrahls in einer Ebene hervorruft. Hierdurch wird die präzise Abtastung von im Wesentlichen ebenen Oberflächen ermöglicht, da im Unterschied zu einer Verschwenkung des Messstrahls relativ zu der abzutastenden Oberfläche keine Winkelabhängigkeit der von der Oberfläche reflektierten Reflexionsstrahlen auftritt. Vielmehr trifft der Messstrahl stets mit der gleichen Orientierung auf die zu vermessende Oberfläche und kann in gleicher Weise auch durch das F-Theta-Objektiv und den Spiegel zurück in den Kohärenztomographen zurück reflektiert und zusammen mit dem Referenzlichtstrahl auf den Detektor geleitet werden.

In weiterer Ausgestaltung der Erfindung ist als Leuchtmittel für die Abtasteinrichtung eine Lichtquelle, insbesondere eine Superlumineszenzdiode, mit einer Wellenlänge größer 900 nm, vorzugsweise größer 1200 nm, besonders bevorzugt 1350 nm, vorgesehen. Eine Superlumineszenzdiode weist üblicherweise eine Kohärenzlänge von 10 nm bis 50 nm auf und stellt Lichtstrahlen mit einer Bandbreite von ca. 10 nm bis 25 nm um eine Hauptwellenlänge herum bereit.

In weiterer Ausgestaltung der Erfindung ist die Abtasteinrichtung derart in den Bearbeitungskopf integriert, dass wenigstens eine optische Komponente gemeinsam von dem Bearbeitungsstrahl und von dem Messstrahl nutzbar ist. Bei der gemeinsam genutzten optischen Komponente handelt es sich vorzugsweise um eine Linse oder um ein Schutzglas. Die Lines kann insbesondere für die Fokussierung des Bearbeitungsstrahls und des Meßlichtstrahls vorgesehen sein, um eine Anpassung an unterschiedliche Abstände zwischen Werkstück und Bearbeitungskopf zu ermöglichen. Das Schutzglas dient zum Schutz des optischen Systems des Bearbeitungskopfs und des optischen Kohärenztomographen. Dem Schutzglas können am Bearbeitungskopf vorgesehene Einrichtungen wie Ausströmer für Schutzgas oder Temperatursensoren zugeordnet sein, die eine Verschmutzung und/oder eine Überhitzung des Schutzglases verhindern sollen. Dadurch können Einflüsse, die durch die Materialbearbeitung entstehen, wirkungsvoll von der Abtasteinrichtung ferngehalten werden. Hierbei kann es sich beispielsweise um Dämpfe und/oder Materialpartikel handeln, die von der Schweißstelle ausgehen und ohne entsprechende Schutzmechanismen zu einer Beeinträchtigung der Messqualität der Abtasteinrichtung führen würden.

In weiterer Ausgestaltung der Erfindung ist eine zumindest im Wesentlichen übereinstimmende Anordnung einer Bearbeitungsebene des Bearbeitungsstrahls und einer Abtastebene des Messstrahls vorgesehen. Bei einer Oberflächenbearbeitung durch den Bearbeitungsstrahl wird dieser derart fokussiert, dass ein Brennpunkt zumindest im Wesentlichen mit dem Auftreffpunkt des Bearbeitungsstrahls auf der zu bearbeitenden Oberfläche übereinstimmt. Erfindungsgemäß ist die Abtasteinrichtung ebenfalls so fokussiert, dass der Brennpunkt des Meßlichtstrahls mit dem Brennpunkt des Bearbeitungsstrahls übereinstimmt. Vorzugsweise weisen der Bearbeitungsstrahl und der Messlichtstrahl eine konfokale Anordnung auf, das heißt, ihre Brennpunkte stimmen überein. Bei einer besonders bevorzugten Ausführung der Erfindung sind der aus dem Bearbeitungskopf austretende Bearbeitungsstrahl und der von der Abtasteinrichtung ausgesendete Abtaststrahl koaxial angeordnet, so dass eine Vermessung des vom Bearbeitungsstrahl bestimmten Bearbeitungspunkts durch die Abtasteinrichtung ermöglicht wird.

Nachstehend wird ein Ausführungsbeispiel der Erfindung anhand der Zeichnung näher beschrieben. In dieser zeigen:
- Figur 1:: eine schematische Darstellung einer Bearbeitungseinrichtung zum Laserschweißen mit einem Industrieroboter; und
- Figur 2:: eine schematische Darstellung des im Bearbeitungskopf integrierten optischen Kohärenztomographen,
- Figur 3:: eine schematische Darstellung einer im Strahlengang des Bearbeitungskopfs angeordneten Kombination eines Schwenkspiegels mit einer F-Theta-Linse
- Figur 4: eine schematische Darstellung einer Verwendung des Bearbeitungskopfes für einen Bohrvorgang.

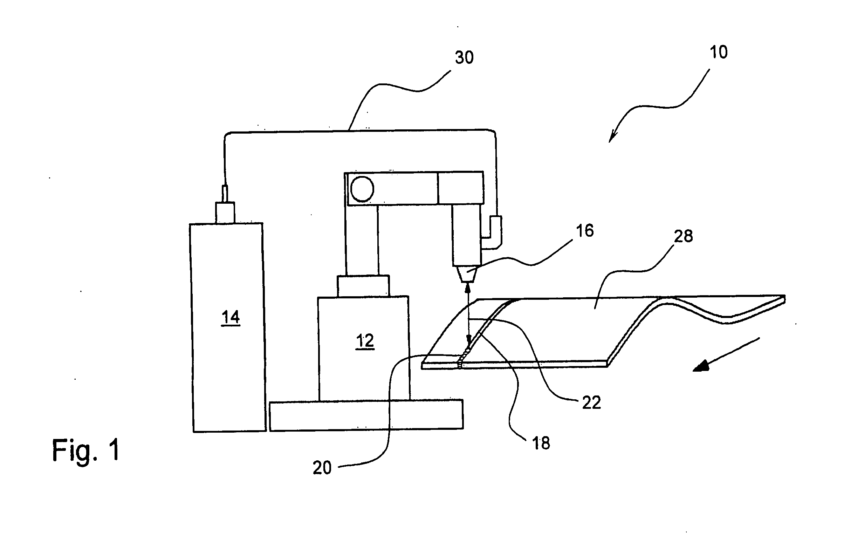

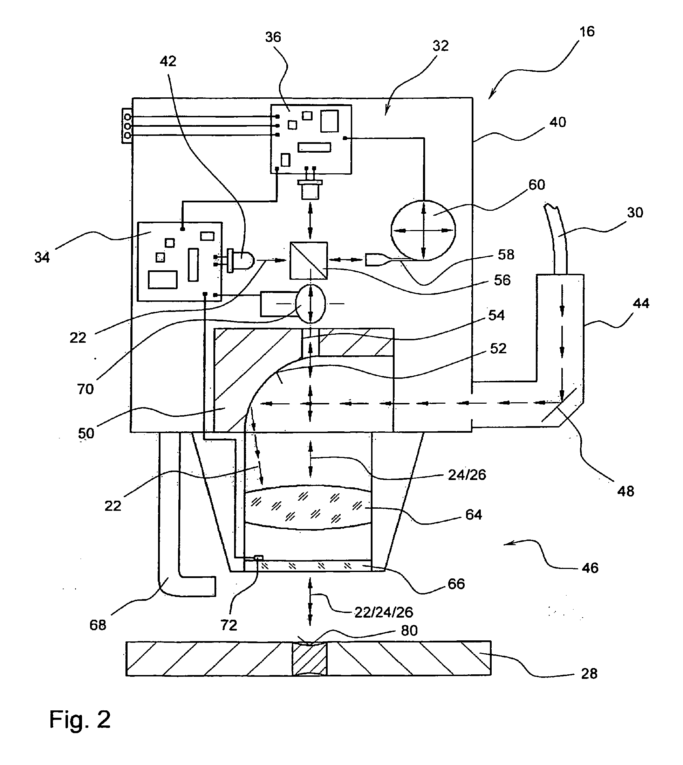

In der Figur 1 ist eine Bearbeitungseinrichtung 10 dargestellt, die sich im Wesentlichen aus einem Industrieroboter 12 und einer Laserquelle 14 sowie einem vom Industrieroboter 12 getragenen Bearbeitungskopf 16 zusammensetzt. Der Industrieroboter 12 ist ein Mehrachs-Roboter, der den Bearbeitungskopf 16 in verschiedene räumliche Lagen relativ zu dem Werkstück 28 bringen kann, um eine vorteilhafte Bearbeitung des Werkstücks 28 zu gewährleisten. Die Laserquelle 14 ist mittels einer flexiblen Glasfaserleitung 30 mit dem Bearbeitungskopf 16 verbunden. Dabei wird das von der Laserquelle 14 erzeugte Laserlicht in ein im Bearbeitungskopf 16 vorgesehenes, in der Figur 2 näher dargstelltes, optisches System eingekoppelt. Ausgehend vom optischen System wird das Laserlicht als hochenergetischer Bearbeitungsstrahl 22 auf das Werkstück 28 gerichtet.

In dem Bearbeitungskopf 16 ist zusätzlich zu dem optischen System für den hochenergetischen Bearbeitungsstrahl 22 ein in der Figur 2 näher dargestellter optischer Kohärenztomograph 32 angeordnet, der für eine Ermittlung einer durch den Schweißvorgang erzeugten Oberflächenstruktur im Bereich des Schweißspalts 18 und/oder der Schweißnaht 20 vorgesehen ist. Für den vorgesehenen Bearbeitungsvorgang wird das Werkstück 28 in einer in Figur 1 eingezeichneten Bearbeitungsrichtung verschoben, während der Bearbeitungskopf 16 mit Hilfe des Industrieroboters 12 in einem im Wesentlichen konstanten Abstand und in einer im Wesentlichen lotrechten Stellung gegenüber dem Werkstück 28 gehalten wird.

Der in.der Figur 2 schematisch in der Art eines Blockschaltbilds dargestellte Bearbeitungskopf 16 umfasst zwei im Wesentlichen unabhängig voneinander operierende Systeme: Ein erstes optisches System dient zur Weiterleitung des von der Laserquelle 14 bereitgestellten hochenergetischen Bearbeitungsstrahls 22. Zu diesem Zweck ist an dem Gehäuse 40 eine Umlenkeinrichtung 44 vorgesehen, die einen Umlenkspiegel 48 zur rechtwinkligen Umlenkung des aus der Glasfaserleitung 30 ausgekoppelten Laserstrahls aufweist. Weiterhin ist ein Fokussierblock 50 zur Fokussierung des Laserstrahls auf den Bearbeitungsort 80 am Werkstück 28 vorgesehen. Zu diesem Zweck weist der Fokussierblock 50 eine abschnittsweise konkav gekrümmte Spiegelfläche 52 auf, die den auftreffenden, aufgeweiteten Laserstrahl fokussiert, so dass dieser auf dem Werkstück 28 einen Brennfleck bildet.

Zudem ist der Fokussierblock 50 mit einer Durchgangsbohrung 54 versehen, die ein Hindurchtreten eines Messstrahls 24 des gemäß der Figur 2 oberhalb des Fokussierblocks 50 angeordneten optischen Kohärenztomographen 32 ermöglicht. Weiterhin erlaubt die Durchgangsbohrung 54 auch einen Durchgang von Reflexionslicht, das an der Oberfläche des Werkstücks 28 in Richtung des optischen Kohärenztomographen 32 zurückreflektiert wird.

Der optische Kohärenztomograph 32 umfasst eine Superlumineszenzdiode 42, die elektrisch mit einer Steuerschaltung 34 verbunden ist und Licht mit einer Wellenlänge von etwa 1300 nm in Richtung eines Strahlteilers 56 abstrahlt. Am Strahlteiler 56, der als halbdurchlässiger Spiegel aufgebaut ist, wird das von der Superlumineszenzdiode 42 ausgesendete Licht teilweise in Richtung eines Referenzarms 58 transmittiert. Ein weiterer Teil des von der Superlumineszenzdiode 42 abgegebenen Lichts wird am Strahlteiler 56 in Richtung des Werkstücks 28 gespiegelt und bildet einen Messarm.

Der Referenzarm 58 wird durch eine Glasfaserwicklung gebildet, die auf einem aus piezoelektrischen Material gefertigten Wickelkern 60 aufgebracht ist. Der Wickelkern 60 ist seinerseits elektrisch mit einer Auswerteschaltung 36 verbunden, um durch Anlegen einer elektrischen Spannung eine gezielte Ausdehnung des Wickelkerns 60 und somit eine Dehnung der Glasfaserwicklung des Referenzarms 58 herbeizuführen. Die Längenänderung des Referenzarms 58, die exemplarisch mit einer Frequenz von 200 Hz und mit einer Dehnung von 8 mm für den Referenzarm 58 ausgeführt werden kann, ändert die Laufzeit des in den Referenzarm 58 eingekoppelten Lichts der Superlumineszenzdiode 42.

Durch Wechselwirkung des in den Referenzarm 58 eingekoppelten Lichts mit dem vom Werkstück 28 zurückreflektierten Reflexionsstrahl 26 findet eine Interferenz der beiden Lichtstrahlen, das heißt eine Addition oder Subtraktion der Lichtwellen, statt. Die hierbei auftretende Lichtintensität kann durch eine Fotodiode 62 ermittelt werden, die an der Auswerteschaltung 36 angeschlossen ist. In Kenntnis der jeweils momentan vorliegenden Länge des Referenzarms 58 und der an der Fotodiode 62 vorliegenden Lichtintensität kann auf den Abstand zwischen dem optischen Kohärenztomographen 32 und der Oberfläche des Werkstücks 28 rückgeschlossen werden, so dass bei geeigneter Führung des Messstrahls 24 ein Oberflächenprofil des Werkstücks 28 ermittelt werden kann.

Obwohl während des Schweißvorgangs durch Einwirken des hochenergetischen Bearbeitungsstrahls 22 auf das Werkstück 28 sowohl eine Rückstreuung des am Werkstück 28 reflektierten Laserlichts als auch eine durch thermische Strahlung bedingte Aussendung von Sekundärlicht stattfindet, kann durch die Verwendung des optischen Kohärenztomographen 32 eine unmittelbare Bestimmung des Oberflächenprofils im Bereich der Schweißstelle bzw. des Bearbeitungsorts verwirklicht werden. Das vom Werkstück 28 rückgestreute Primärlicht des Bearbeitungsstrahls 22 und das vom erhitzten Werkstück 28 ausgesendete Sekundärlicht erfüllen die Kohärenzbedingung des mit einer kurzen Kohärenzlänge von 10nm bis 50 nm ausgesendeten Messlichts nicht, wie sie für eine Interferenz mit dem in den Referenzarm 58 eingekoppelten Licht der Superlumineszenzdiode 42 erforderlich ist.

Wie in der Figur 2 schematisch dargestellt ist, sind der hochenergetische Bearbeitungsstrahl 22, der Messstrahl 24 und der in den optischen Kohärenztomographen 32 rückreflektierte Reflexionsstrahl 26 koaxial zueinander angeordnet. Für eine Justierung der Größe des Brennflecks, den der hochenergetische Bearbeitungsstrahl auf der Oberfläche des Werkstücks 28 aufweist, ist in dem optischen System für den hochenergetischen Bearbeitungsstrahl 22 eine gemäß der Figur 2 in vertikaler Richtung verschiebbare Fokussierlinse 64 angebracht, die von einer nicht dargestellten Stelleinrichtung angesteuert wird.

Der Messstrahl 24 kann mit Hilfe einer Ablenkeinrichtung 70, die als Schwenkspiegel mit zwei orthogonal zueinander ausgerichteten Schwenkachsen ausgebildet ist, umgelenkt werden, um eine flächige Abtastung der Oberfläche des Werkstücks 28 zu ermöglichen.

Um das gesamte optische System sowohl des hochenergetischen Bearbeitungsstrahls 22 als auch des optischen Kohärenztomographen 32 vor unerwünschten Umwelteinflüssen zu schützen, wie sie insbesondere durch Dämpfe und Partikel ausgehend von der Schweißstelle auftreten können, ist an einer unteren Stirnfläche des Bearbeitungskopfs 16 ein Abdeckglas 66 angebracht, das aus einem thermisch stabilen, optisch transparenten Material hergestellt ist. Das Abdeckglas 66 kann gegebenenfalls mit einer Filterbeschichtung versehen werden, die lediglich eine Transmission für die Lichtwellenlängen des Bearbeitungsstrahls 22, des von der Superlumineszenzdiode 42 ausgesendeten Messstrahls 24 und des Reflexionsstrahls 26 durchlässig ist. Dem Abdeckglas 66 ist ein mit der Steuerschaltung 34 elektrisch verbundener Temperatursensor 72 zugeordnet, der der Detektion einer thermischen Überlastung des Abdeckglases 66 dient. Weiterhin ist ein Strahlrohr 68 am Bearbeitungskopf 16 angebracht, das eine quer zur optischen Achse des Reflexionsstrahls 26 und des Messstrahls 24 ausgerichtete Schutzgasströmung über das Abdeckglas 66 leiten kann, um einen Niederschlag von Dämpfen oder Schmelzpartikeln ausgehend von dem Schweißbad zu verhindern.

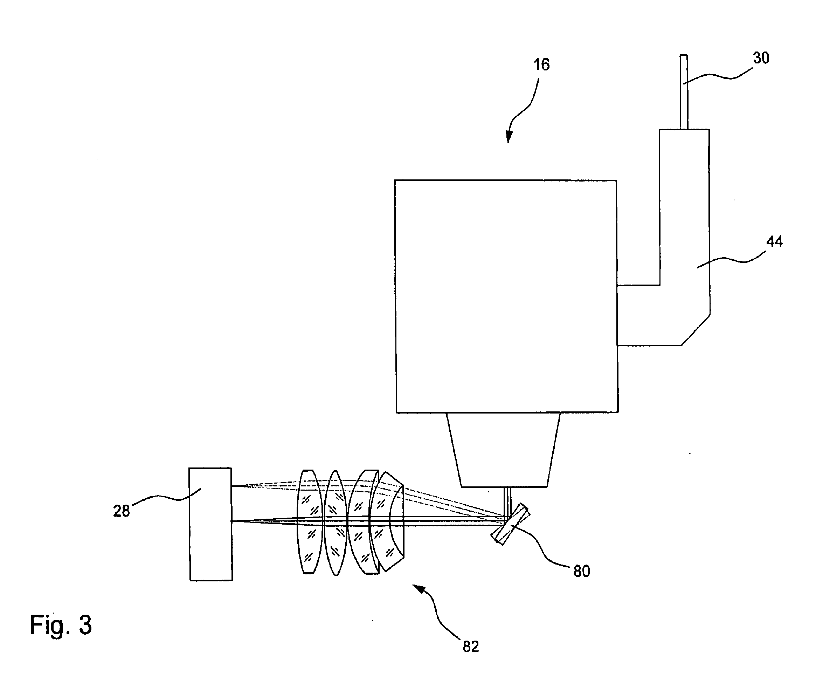

Dem in der Figur 3 näher dargestellten Bearbeitungskopf 16, der den gleichen Aufbau wie der in Figur 2 dargestellte Bearbeitungskopf 16 aufweist, ist ein planer Schwenkspiegel 80 sowie eine im Strahlengang zwischen Schwenkspiegel 80 und Messobjekt 28 angeordnete F-Theta-Linsenanordnung 82 zugeordnet. Im Gegensatz zu dem in Figur 2 dargestellten Bearbeitungskopf 16 ist das optische System des Bearbeitungskopfs 16 gemäß Figur 3 auf die Abgabe eines Parallelstrahls eingerichtet. Der Schwenkspiegel 80 kann mittels nicht dargestellter Aktoren um eine Drehachse verschwenkt werden, die in einer dem Messstrahl zugewandten Spiegelebene an der Oberfläche des Schwenkspiegels 80 angeordnet ist und gemäß der Darstellung der Figur 3 orthogonal zur Zeichenebene verläuft. Der aus dem Bearbeitungskopf 16 austretende Messstrahl ist zur Verdeutlichung der Wirkungsweise der F-Theta-Linsenanordnung 82 als Parallelstrahl dargestellt, kann aber je nach Brechkraft der F-Theta-Linse auch als divergierender oder als konvergierender Strahl bereitgestellt werden.

Der Messstrahl trifft auf den Schwenkspiegel 80 auf und wird von diesem entsprechend abgelenkt. Der unter unterschiedlichen Winkeln und an unterschiedlichen Orten auf die F-Theta-Linsenanordnung 82 auftreffende Messstrahl wird durch die Brechwinkung der F-Theta-Linsenanordnung 82 in einen fokussierten Messstrahl überführt, dessen Hauptstrahl stets parallel zur optischen Achse der F-Theta-Linsenanordnung 82 verläuft. Bei dem in Figur 3 dargestellten Ausführungsbeispiel liegt die abzutastende Oberfläche des Messobjekts 28 der Brennebene des Messstrahls. Damit kann bei einer Verschwenkung des Schwenkspiegels 80 um die Schwenkachse ein linienförmiger Oberflächenbereich des Messobjekts 28 stets mit gleich bleibender Fokussierung des Messstrahls abgetastet werden. Ist der Schwenkspiegel 80 zusätzlich in einer orthogonal zur oben beschriebenen Schwenkachse um eine weitere, in der Zeichenebene liegende Schwenkachse verschwenkbar, so kann wegen der rotationssymmetrisch ausgeführten Linsen der F-Theta-Linsenanordnung 82 eine zweidimensionale Oberflächenabtastung des Messobjekts 28 vorgenommen werden.

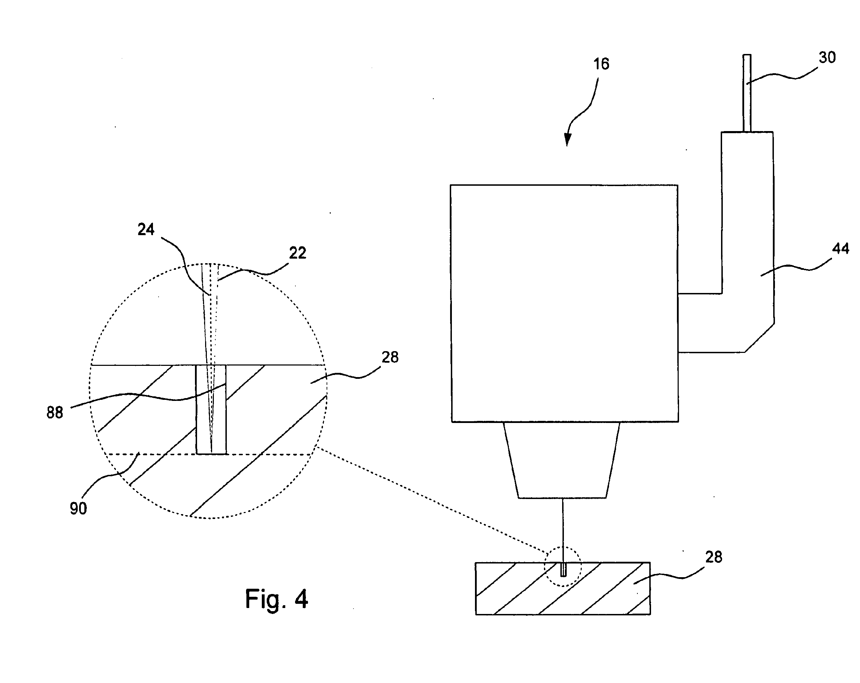

Bei der in Figur 4 schematisch dargestellten Verwendung des Bearbeitungskopfs 16 für einen Bohrungsvorgang sind in der vergrößerten Detailansicht der Bearbeitungsstrahl 22 sowie der Messstrahl 24 dargestellt, die in eine Bohrung 88 eintreten. Der Bearbeitungsstrahl 22 ist auf einen Brennpunkt 90 fokussiert. Dier Brennpunkt 90 liegt bei der Darstellung gemäß der Figur 4 auf der Höhe des Bohrungsgrunds, stimmt also mit der Position des Arbeitsorts, an dem der Materialabtrag mittels des Bearbeitungsstrahls 22 stattfindet, überein. Somit trifft der Bearbeitungsstrahl 22 mit maximaler Energiedichte auf den Arbeitsort auf und kann das Material mit maximaler Effizienz abtragen.

Da sich der Arbeitsort durch den Materialabtrag verlagert, kommt es ohne eine Fokuslagenregelung für den Bearbeitungsstrahl 22 zu einer Reduzierung der Energiedichte, da der Bearbeitungsstrahl 22 defokussiert auf den Arbeitsort auftrifft. Um dies zu vermeiden, ist vorgesehen, anhand des Messstrahls 24 und der daraus zu ermittelnden Distanzinformation der Abstand zwischen Bearbeitungskopf 16 und Arbeitsort so zu regeln, dass die Brennebene 90 stets auf der Höhe des Arbeitsorts liegt. Zur Veränderung des Abstands kann der Bearbeitungskopf 16 und/oder das Werkstücks verlagert werden. Zusätzlich oder alternativ kann der Brennpunkt durch eine Optik (Fokussierlinse 62 in Figur 2) verändert werden, die den Brennpunkt erzeugt und im Bearbeitungskopf angeordnet ist.

## Patentansprüche

1. Bearbeitungseinrichtung (10) für die Bearbeitung von Werkstücken mit lichtundurchlässiger Oberfläche, mit wenigstens einem Bearbeitungskopf (16), der zur Bereitstellung wenigstens eines hochenergetischen Bearbeitungsstrahls (22), insbesondere eines Elektronen- oder Laserstrahls, ausgebildet ist, wobei dem Bearbeitungskopf (16) wenigstens eine als optischer Kohärenztomograph (32) ausgebildete Abtasteinrichtung zugeordnet ist, die für eine Oberflächenabtastung vorgesehen ist,
**dadurch gekennzeichnet, dass**
eine Ablenkeinrichtung (70) an der Abtasteinrichtung (32) vorgesehen ist, die für eine Ablenkung des Messstrahls (24) aus der Abtasteinrichtung (32) auf das Werkstück (28) und von Reflexionsstrahlen (26) ausgehend vom Werkstück (28) in die Abtasteinrichtung (32) ausgebildet ist, wobei die Ablenkeinrichtung (70) wenigstens einen beweglich aufgehängten, von einer Steuereinrichtung (34) ansteuerbaren Spiegel aufweist, und dass
im Strahlengang zwischen dem Spiegel und dem Werkstück (28) ein F-Theta-Objektiv angeordnet ist.

2. Bearbeitungseinrichtung nach Anspruch 1, **dadurch**
**gekennzeichnet, dass** ein für die Abtasteinrichtung (32) vorgesehener optischer Referenzpfad (58) in einer optischen Faser geführt ist.

3. Bearbeitungseinrichtung nach Anspruch 2, **dadurch**
**gekennzeichnet, dass** die optische Faser des Referenzpfads (58) auf einen von einer Steuereinrichtung (34) ansteuerbaren Dehnkörper (60) aufgebracht, insbesondere aufgewickelt ist.

4. Bearbeitungseinrichtung nach Anspruch 2 oder 3,
**dadurch gekennzeichnet, dass** eine Länge des optischen Referenzpfads derart gewählt ist, dass ein Abstand zwischen einer Austrittsebene eines Messstrahls (24) und einer zu vermessenden Oberfläche (28) größer 100 mm, vorzugsweise größer 250 mm, besonders bevorzugt größer 500 mm, insbesondere größer 800 mm betragen kann.

5. Bearbeitungseinrichtung nach einem der vorhergehenden
Ansprüche, **dadurch gekennzeichnet, dass** als Leuchtmittel für die Abtasteinrichtung eine Lichtquelle, insbesondere eine Superlumineszensdiode (42) mit einer Wellenlänge größer 900 nm, vorzugsweise größer 1200 nm, insbesondere größer 1300 nm vorgesehen ist.

6. Bearbeitungseinrichtung nach einem der vorhergehenden
Ansprüche, **dadurch gekennzeichnet, dass** die Abtasteinrichtung (32) derart in den Bearbeitungskopf (16) integriert ist, dass wenigstens eine optische Komponente (66) gemeinsam von dem Bearbeitungsstrahl (22) und dem Messstrahl (24) nutzbar ist.

7. Bearbeitungseinrichtung nach einem der vorhergehenden
Ansprüche, **dadurch gekennzeichnet, dass** eine zumindest im Wesentlichen übereinstimmende Anordnung einer Bearbeitungsebene des Bearbeitungsstrahls (22) und einer Abtastebene des Messstrahls (24) vorgesehen ist.

## Claims

1. Machining device (10) for the machining of work pieces with opaque surfaces comprising at least one machining head (16) which is designed to provide at least one high-energy machining beam (22), in particular an electron beam or a laser beam, wherein at least one scanning device taking the form of an optical coherence tomograph (32), which is provided for a surface scanning, is assigned to the machining head (16),
**characterised in that**
a deflecting device (70) is provided on the scanning device (32), which is configured to deflect the measuring beam (24) out of the scanning device (32) onto the work piece (28) and to deflect reflected beams (26) emanating from the work piece (28) into the scanning device (32), wherein the deflecting device (70) comprises at least one movably suspended mirror which is capable of being driven by a control device (34), and that
an f-theta objective is arranged in the beam path between the mirror and the work piece (28).

2. Machining device according to Claim 1, **characterised in that** an optical reference path (58), which is provided for the scanning device (32), is guided in an optical fibre.

3. Machining device according to Claim 2, **characterised in that** the optical fibre of the reference path (58) is applied, in particular wound, onto an expanding body (60) which is capable of being driven by a control device (34).

4. Machining device according to Claim 2 or 3, **characterised in that** a length of the optical reference path is chosen in such a manner that a spacing between an exit plane of a measuring beam (24) and a surface (28) to be gauged may amount to more than 100 mm, preferentially more than 250 mm, particularly preferably more than 500 mm, in particular more than 800 mm.

5. Machining device according to one of the preceding claims, **characterised in that** a light-source, in particular a superluminescent diode, (42) with a wavelength of more than 900 nm, preferentially more than 1200 nm, in particular more than 1300 nm, is provided by way of illuminating means for the scanning device.

6. Machining device according to one of the preceding claims, **characterised in that** the scanning device (32) is integrated into the machining head (16) in such a manner that at least one optical component (66) is capable of being used jointly by the machining beam (22) and by the measuring beam (24).

7. Machining device according to one of the preceding claims, **characterised in that** an at least substantially matching arrangement of a machining plane of the machining beam (22) and a scanning plane of the measuring beam (24) is provided.

## Revendications

1. Dispositif d'usinage (10) dévolu à l'usinage de pièces munies d'une surface opaque, équipé d'au moins une tête d'usinage (16) conçue pour fournir au moins un rayonnement d'usinage (22) de haute énergie, en particulier un rayonnement d'électrons ou un rayonnement laser, sachant qu'un dispositif de balayage exploratoire, réalisé sous la forme d'un tomographe (32) à cohérence optique et prévu pour un balayage exploratoire de surface, est affecté à ladite tête d'usinage (16),
**caractérisé par le fait**
**qu'**un dispositif déflecteur (70), prévu sur le dispositif (32) de balayage exploratoire, est réalisé en vue d'une déflexion du rayonnement de mesure (24) vers la pièce (28) à partir dudit dispositif (32) de balayage exploratoire, et de rayonnements réfléchis (26) parvenant dans ledit dispositif (32) de balayage exploratoire à partir de ladite pièce (28), ledit dispositif déflecteur (70) comportant au moins un miroir suspendu avec mobilité et pouvant être activé par un dispositif de commande (34) ; et
**qu'**un objectif f-thêta est placé sur la trajectoire de rayonnement entre ledit miroir et ladite pièce (28).

2. Dispositif d'usinage selon la revendication 1, **caractérisé par le fait qu'**un trajet de référence optique (58), prévu pour le dispositif (32) de balayage exploratoire, est guidé dans une fibre optique.

3. Dispositif d'usinage selon la revendication 2, **caractérisé par le fait que** la fibre optique du trajet de référence (58) est implantée, notamment enroulée sur un corps expansible (60) pouvant être activé par un dispositif de commande (34).

4. Dispositif d'usinage selon la revendication 2 ou 3, **caractérisé par le fait qu'**une longueur du trajet de référence optique est choisie de façon telle qu'une distance, comprise entre un plan de sortie d'un rayonnement de mesure (24) et une surface (28) devant être mesurée, soit supérieure à 100 mm, de préférence supérieure à 250 mm, supérieure à 500 mm avec préférence particulière, et puisse notamment excéder 800 mm.

5. Dispositif d'usinage selon l'une des revendications précédentes, **caractérisé par le fait qu'**une source de lumière, en particulier une diode superluminescente (42) présentant une longueur d'ondes supérieure à 900 nm, de préférence supérieure à 1 200 nm, et notamment supérieure à 1 300 nm, est prévue en tant que moyen d'éclairage dédié au dispositif de balayage exploratoire.

6. Dispositif d'usinage selon l'une des revendications précédentes, **caractérisé par le fait que** le dispositif (32) de balayage exploratoire est intégré dans la tête d'usinage (16) de telle manière qu'au moins un composant optique (66) puisse être utilisé, en commun, par le rayonnement d'usinage (22) et le rayonnement de mesure (24).

7. Dispositif d'usinage selon l'une des revendications précédentes, **caractérisé par** la présence d'un agencement, au moins pour l'essentiel concordant, d'un plan d'usinage du rayonnement d'usinage (22) et d'un plan de balayage exploratoire du rayonnement de mesure (24).
